# EUROPEAN PATENT SPECIFICATION

(11) **EP 3 205 696 B1**
(45) Date of publication and mention of the grant of the patent: **21.07.2021**
(21) Application number: 14789585.8
(22) Date of filing: 08.10.2014
(51) Int. Cl.: C09J 1/00, C08K 3/08, B32B 27/20

(54) **ADHESIVE COMPOSITION FOR FLEXIBLE CONTAINERS**
KLEBSTOFFZUSAMMENSETZUNG FÜR FLEXIBLE BEHÄLTER
COMPOSITION ADHÉSIVE POUR EMBALLAGES SOUPLES

(43) Date of publication of application: 16.08.2017
(73) Proprietor: Samtack, S.L., 08292 Barcelona (ES)
(72) Inventor: NERÍN DE LA PUERTA, Cristina, E-50008 Zaragoza (ES); CÁMARA RICA, Carmen, E-28040 Madrid (ES); MADRID ALBARRÁN, Yolanda, E-28005 Madrid (ES)
(74) Representative: Isern Patentes y Marcas S.L.
(86) International application number: PCT/ES2014/070766
(87) International publication number: WO 2016/055670

(56) References cited:
- US-A1- 2007 178 263
- US-A1- 2012 207 846
- Yifeng Zhang ET AL: "Creation of Highly Stable Selenium Nanoparticles Capped with Hyperbranched Polysaccharide in Water", Langmuir, vol. 26, no. 22, 16 November 2010 (2010-11-16), pages 17617-17623, XP055694818, US ISSN: 0743-7463, DOI: 10.1021/la1033959

## Description

### SCOPE AND FIELD OF THE INVENTION

The invention herein falls within the field of materials, specifically, the field of adhesives. In particular, the invention relates to adhesive materials suitable for use in flexible packaging to protect and preserve biological material, such as food, as defined in the annexed claims.

The present invention relates to an adhesive composition for a multilayer system which forms a flexible container comprising selenium nanoparticles (also called SeNPs) that confer antioxidant properties to the flexible container, allowing better preservation of the biological material. Said adhesive composition has the technical advantage that is highly effective, namely, has the dual capacity of being an adhesive and an antioxidant, meaning certain layers can be dispensed with in the final packaging and more importantly, there is no migration of selenium particles from the packaging to the biological material contained in said packaging as said adhesive composition is located between layers and not in direct contact with the biological material.

The present invention also relates to an antioxidant multilayer system for manufacturing flexible packaging comprising the adhesive composition according to the present invention, and the final packaging comprising the multilayer system with highly safe antioxidant capacity for material of biological origin which is packaged as there is no migration of selenium nanoparticles to the product.

The present invention also relates to the method for obtaining the adhesive composition, and the use of the adhesive composition according to the present invention for producing an antioxidant multilayer system with nanoparticles suitable for making flexible packaging that protect and preserve the biological material of plant or animal origin, such as food, cell cultures, organs, sperm, etc.

### BACKGROUND OF THE INVENTION

The phenomenon of "adhesion" can be defined as the force capable of holding the molecules from different kinds of materials together. By contrast, the term cohesion is used to describe the force of attraction between molecules having the same material. Adhesion is a phenomenon that can be addressed from different disciplines, although all of them fall within the field of physical chemistry.

Numerous theories have been postulated to interpret the phenomenon of adhesion:
- the mechanical theory considers adhesion occurs due to the anchoring of the adhesive material in the pores and rough points of the substrate;
- the diffusion theory; the interdiffusion of molecules between the surfaces of contact materials is necessary;
- the theory of thermodynamic adsorption or moisture; adhesion is the result of physical interaction of the surfaces that are in contact with each other, due to the wetting effect, dependent on the surface tension; and
- the theory of chemical adhesion considers covalent bonds produced between surfaces, this situation being the one in which the bond is stronger, preventing separation of the substrates.

The combination of these theories illustrates the aspects of adhesion that can be tested experimentally:
- The proximity and flexibility between the surfaces is critical, as better connections are obtained the more flexible the materials are that are joined,
- The presence of groups with electrostatic charge enables more solid connections,
- The similarity in the solubility parameters of the adhesive and the substrate promotes adhesion and
- The thickness of the adhesive layer influences its adhesion capacity.

There are numerous factors that influence adhesion:
a).-the substrate: There are different aspects of the substrate to be taken into consideration:

*Degree of roughness or smoothness of a substrate.* It affects the contact area of an adhesive. If the substrate is very rough, the contact can only occur at the "peaks" or "hills" on the surface, but the "valleys" will not be in contact with the adhesive. The actual contact area is much less than what is visible and initially anticipated, resulting in poor adhesion. Therefore, an adhesive for an application of such characteristics are required to possess fluidity and appropriate wettability in order to achieve all the "valleys". It will also be necessary to use a greater weight of adhesive.

*Moisture.* The moisture present in the bonding surfaces can interfere with the process. For example, certain adhesives require environmental humidity and/or the substrate to develop adhesion. On the other hand, there are frequently situations in the food industry where the adhesive is applied on surfaces that may contain condensation. There are certain adhesives such as water-based adhesives, which can tolerate a certain amount of moisture, but if this is excessive, the adhesive may not fulfil its function. In situations like this, the alternative would be to use solvent-based or hot-melt adhesives (HMA).

*Surface tension.* Surface tension is the force with which the surface molecules of a fluid are attracted to the mass of said fluid. When the fluid comes into contact with a solid surface or other liquid, said surface molecules are subjected to a system of forces with a resultant. Depending on said resultant force, the fluid may or may not wet the surface. For the adhesive to wet the substrate, the surface tension of the adhesive should be less than, or at most equal to, the surface tension of the substrate. Therefore, the adhesive flows onto the surface easily and it becomes easier for the adhesive bond to the substrate.

*Shape.* The shape of the bonding surfaces may limit the choice of adhesive. For example, this may be true for convex surfaces that have a very small radius or for corners of boxes. To that end, the adhesive should provide a high internal cohesion and, if it is on a tape, the material of said tape must be flexible enough not to pull the adhesive.

### b).- the temperature.

The physicochemical properties, including the rheological properties are directly dependent on temperature. At temperatures below those recommended in the technical specifications, the adhesives harden, thereby reducing adhesion, in particular, immediate adhesion. They soften at high temperatures, due to the reduction of internal cohesion. The temperature increase leads to the progressive softening and increased adhesion because it makes the adhesive flow and the contact area with the substrate increases. However, excessive heating leads to the adhesive losing its adhesive properties and even degradation of the components responsible for the adhesion, therefore, this results in loss of adhesion.

### c).- resistance to oxidation and UV radiation.

Oxidation involves aging of the adhesive. High temperatures increase the rate of oxidation. In formulating the adhesive stabilizers are included to reduce the rate of oxidation and to extend its shelf life. When oxidation occurs, firstly, the adhesive begins to turn yellow. It gradually loses its adhesive properties and finally hardens to prevent tampering. UV radiation is significant when the adhesive is used for bonding transparent substrates.

In this regard, the term "adhesive" in the general state of the art, is defined as mixtures of monomers or polymers, which polymerize during the adhesion process. These adhesives are usually accompanied by other additives such as antioxidants, stabilizers, plasticizers and retarders and others, with or without solvents.

Although the development of adhesives is constantly being researched, in general, we can refer to three major groups of adhesives:

### Soluble or water-dispersed adhesives:

These adhesives are based on natural polymers such as starches and dextrins or synthetics such as polyvinyl acetate emulsions (PVAc). The adhesive film is caused by evaporation of water, used as a solvent. The most common application for this type of adhesive is to obtain corrugated cardboard and for gluing paper and cardboard to obtain boxes and bags. The main advantages are ease of use during production, ease of cleaning and reasonable cost. Disadvantages include the slow development of the binding capacity, very limited adhesion to plastics and polymeric coatings and poor moisture resistance.

The PVAc is a more widely used water-based adhesive. It is prepared by emulsion polymerization with polyvinyl alcohol (PVA) or 2-hydroxyethyl ether as stabilizers. It may also include plasticizers, fillers, solvents, defoamers and preservatives. The emulsions may have a wide range of consistency, from milky liquids to thick pastes. There are numerous applications: glue for the formation of cardboard boxes and formation of tubes or cardboard spiral axes and formation of paper bags. These are adhesives that quickly develop the adhesion capacity, therefore higher productivity can be achieved. They provide good hardness, being resistant to both cold and heat. The PVAc can be copolymerized with ethylene or acrylic esters, to improve adhesion, especially if they are to be applied to plastic substrates.

Adhesives based on acrylic dispersions are also a very important group of products used primarily for the industry of self-adhesive tapes and labels. They are also used for applications in which PVAc-based adhesives have a certain disadvantage in respect of their level of adherence, for example for bonding non-porous materials, such as the plastic or metal sheets.

### Adhesives carried in organic solvents:

The solvent facilitates the uniform distribution of the adhesive on the bonding surfaces and when it evaporates the film attached thereto can be obtained. The polymers mainly involved in these types of adhesives are elastomers which may be derived from natural or synthetic rubber, copolymers made of styrene-butadiene (SBR). These adhesives are typically pressure sensitive; this is why they are used for adhesive tapes and labels. Within this group the adhesives are derived from polyurethane which are used for obtaining plastic laminated films for various applications: bags and lids of thermoformed containers. They provide excellent properties such as hardness and rigidity, flexibility, clarity, and resistance to temperature. Finally, ethylene and vinyl acetate copolymers are used in heat seal applications by means of applying lateral bands for sealing, which allows the formation of vertical seams in bags obtained from forming-filling-sealing machines. They can also be found in lids for dairy products and individual portions of jam.

The use of this group of adhesives is reduced due to the risk posed by the use of solvents and environmental problems thereof.

### Solventless adhesives:

This type of adhesive is a response to energy input required by adhesives that use a solvent (organic or aqueous), for evaporation thereof and due to the environmental problems involved. These adhesives can also be included within the concept of reactive adhesives. For further details, please refer to the technical section on Complexes. In addition to the adhesives discussed in the aforementioned technical section, another type to consider are the bi-component epoxy resins formed by a fluid epoxy resin and a reagent such as a polyamine containing free amine groups. Both components are pre-mixed at ambient temperature and react to generate adhesion. Finally, adhesives whose polymerization is induced by UV radiation are also included. The chemical basis thereof are acrylates or epoxy. Both require the inclusion of photoinitiators or active substances, in their formulation, to said radiation that trigger the polymerization process. The advantage they provide is that the action of radiation replaces the need to use bi-component adhesives. The properties of the resulting product are comparable to those obtained when the two components are used.

However, adhesion procedures have rarely focused on the addition of active antioxidant substances that exhibit functionality on the substrate not on the adhesive itself, such as the object of the present invention.

In addition, during recent decades, research in science and technology has focused on the manufacture of atomic structures and materials at nanometric scales (1 nm = 10⁻⁹ m), commonly known as nanomaterials providing products with new physicochemical properties different from those of the individual or solid molecules having the same composition thereof. This is because the properties exhibited by the nanomaterials are vastly different from those that exhibit these same materials on a larger scale. The nanoparticles have a higher surface-volume ratio and therefore a larger contact surface with the surrounding area. This makes nanomaterials highly desirable for use in multiple sectors (Johnston et al., 2010. A review of the in vivo and in vitro toxicity of silver and gold particulates: Particle attributes and biological mechanisms responsible for the observed toxicity. Crit Rev Toxicol. 40: 328- 346) and that nanotechnology is expanding at a rapid pace. Therefore, we have moved very quickly from a situation in which there were virtually no nanomaterials in our environment, to being surrounded by a wide variety of products that contain them in their composition.

Specifically, the food industry has applied nanotechnology in areas such as food quality and safety, the development of new food and in packaging (Almengor, 2009. Nanotechnology in the food industry. Electronic Journal, Faculty of Engineering, Rafael Lendívar University. 13: 35-52). It is expected that nanotechnology applications will provide benefits to the food sector, including less use of fats, new flavours and textures, as well as improved nutrient absorption and packaging (ObservatoryNANO, 2009. Nanotechnology in Agrifood sector. Market Report. Prepared by the technology centre ASCR).

Therefore, the inventors of the present invention have focused their efforts on searching for prior art documents that relate to adhesive compositions comprising nanomaterials, in particular, nanoparticulate structures, which provide protection against oxidation of the packaged product, not the adhesive.

To date, researchers have developed the present invention. They have located the scientific documents that relate to the use of nanoparticles in the food packaging industry, but precisely their scientific impact lies in the negative effect they provide and which is to be avoided, as said active agents migrate to the substrate or to the contents of the package.

Therefore, we retrieved the scientific paper published by Almengor L. in 2009 (Nanotechnology in the food industry. Electronic Journal, Faculty of Engineering, Rafael Lendívar University. 13: 35-52) or FOLADORI G. 2008 (Nanotechnology in food and agriculture. University of the Republic, Montevideo, 2008. Page 48) that refers to different types of nanomaterials compatible with packaged foods and the functionality said nanomaterials have. As evidence of these publications, there is packaging that releases chemicals that make it possible for food packaging to interact with its contents. The packaging may release antimicrobial agents, antioxidants, flavours, nanoscopic nutraceuticals or fragrances in foods and beverages that they contain, in order to prolong their shelf life or improve its organoleptic properties such as taste or aroma. Meanwhile, no reference is made to selenium nanoparticles (SeNPs) let alone the addition or use of nanoparticle systems in adhesives that are part of said packaging.

In addition, there are recent publications such as Ávalos A. et al. from 2013, which refers to the risk of toxicity posed by using silver nanoparticles which are very commonly used in the food packaging industry (Silver nanoparticles: applications and toxic hazards to human health and the environment, Complutense Veterinary Science Journal 2013 7(2):1-23).

This publication states that the development of nanotechnology must be accompanied by toxicity studies that reveal the effects of nanoparticles on both human health and the environment, as numerous studies on migration have been conducted and there is presence or transfer of said nanoparticles in food once packaged.

Therefore, although there is currently no specific legislation on nanomaterials, although these fall within the definition of "substance" included in the European Regulation on Chemicals (REACH), the European Food Safety Authority published guidelines entitled "Guidance on the risk assessment of the application of nanoscience and nanotechnologies in the food and feed chain" (EFSA Journal, 2011). One of its recommendations was the need to develop, improve and validate routine methodologies to further explore the toxicity of nanoparticles considering the possible transfer to foods.

Therefore, it is absolutely necessary to find a solution to this transfer problem and also prevent potential health problems from occurring. Therefore, the object of the present invention aims to provide a solution to this technical problem in the state of the art.

In relation to these aforementioned premises in the state of the art, there are several patents which disclose and protect various methods for manufacturing adhesive compositions and multilayer materials which comprise adhesive substances, but which are very different to the object developed by the researchers of the present invention.

Thus, we can refer to the document published as ES2380335. This patent discloses an adhesive composition which has a barrier property. The invention relates to an adhesive composition with barrier properties, to a method for manufacturing mixed sheets (composites) using the adhesive composition with barrier properties of the invention and the use of these mixed sheets for packaging and wrapping products. The present invention aims to improve the processing properties and use of the adhesive compositions with barrier properties. Another object of the invention is to develop adhesive compositions with barrier properties, in particular, against CO₂, O₂, N₂, water vapour and aromas, which can be applied at low temperatures, i.e. between approx. 30°C and 160°C, preferably between approx. 40°C and 120°C, and which have good initial adhesion. Adhesive compositions must be suitable particularly as laminating adhesives for food packaging.

We also retrieved application US2005228096. This patent application consists essentially of arranging sheets of adhesive compositions based on polymeric binders that contain charging materials with a crystal structure. The present invention also relates to the use of films from composite material produced by this process for packaging food or medicines. Direct use of an adhesive in the production of composite materials which, in addition to the bonding of the films, also leads to an active barrier against low molecular weight compounds, such as gases, water vapour or flavours, has many advantages: Laminates of the composite material packaging (multilayered) in order to obtain neutral taste and printability capacity and the introduction of barrier properties can be achieved in one step. There is no need for additional coatings of polyvinylidene chloride and/or ethylene/vinyl alcohol or aluminium layers. This reduces the number of production steps and improves the cost-effectiveness of the packaging material.

Document US2007178263 discloses a multilayer system comprising selenium containing nanoparticles in high amounts (50.000 ppm or more), for better sealing and viscosity properties, nevertheless, this document is silent about the use of selenium as an antioxidant.

Document US2010189634 has also been located. This patent application relates to microbiological processes that use bacteria for the production of elemental selenium nanospheres that have a size in the range and compositions comprising 50-500nm. The invention further relates to elemental selenium in nanospheres directly obtainable by the methods of the invention. The compositions of the invention are useful, in particular, as food additives and for use as raw material in the microelectronics and optics industries. However, this invention does not explain how to stabilize the nanoparticles obtained.

Patent US20120202062 was also located. This patent application discloses novel methods for obtaining selenium nanoparticles effective for biological, stable and monoclinical applications. Said nanoparticles are prepared by reacting a source of selenium with a redox agent in an aqueous medium at a temperature between 0-100°C, in the presence of nucleic acids or poly-oligosaccharides mixtures or their derivatives.

Another related document is application US20120207846. This patent application discloses novel methods for preparing effective selenium nanoparticles. They are prepared by reacting a source of selenium with a reducing agent or an oxidizing agent in an aqueous medium at a temperature between 0-100°C in the presence of selenium binding polymer molecules such as poly/oligopeptide acids or peptone or nucleic acids or poly/oligosaccharide or mixtures thereof. This invention provides the following advantages: better bioavailability and less toxicity; more biologically effective; it can be used as a more effective nutritional supplement; more cost-effective to prepare.

The last document retrieved is international application WO2012009433. This patent application discloses an invention in the field of nanotechnology and, in particular, to the surface of materials containing selenium nanoparticles or nanoclusters of selenium nanoparticles. The surface of the materials exhibit antipathogenic properties. The present invention relates to non-medical applications, such as in the field of textiles, fabrics, woven materials, non-woven materials where antibacterial properties are desired. The present invention also relates to the field of implants and/or medical devices, and, more particularly, to the modification of the surface of the implants and/or medical devices used by selenium nanoclusters for antipathogenic functionality, thereby reducing the risk of infection for patients in whom the implants or medical devices are fitted or implanted.

It is observed from the state of the art found that the addition of biologically active compounds such as the object of the present invention are not described in the state of the art, although the possibility of including bioactive molecules in packaging is described, although causing a transfer in biological material that the packages contain.

In addition, current publications on the subject do not mention adhesion with antioxidant active substances that represent the functionality of the adhesive itself, not on the substrate or on packaged product, not as those of object of the present invention.

Therefore, the present invention is a substantial difference in respect of the state of the art, as it relates to an adhesive composition comprising an active antioxidant agent (selenium nanoparticles) having functionality on the packaging for which it is used and on the contents of said packaging, namely, on the packaging material of biological origin without causing migration or transfer from the adhesive to the packaged product of biological origin.

### BRIEF DESCRIPTION OF THE FIGURES

As a complement of the description being made and for a better understanding of the characteristics of the invention, according to an example of a practical preferred embodiment thereof, attached as an integral part of the aforementioned description are the following figures where, for purposes of illustration and in a non-limiting manner, the following is shown:

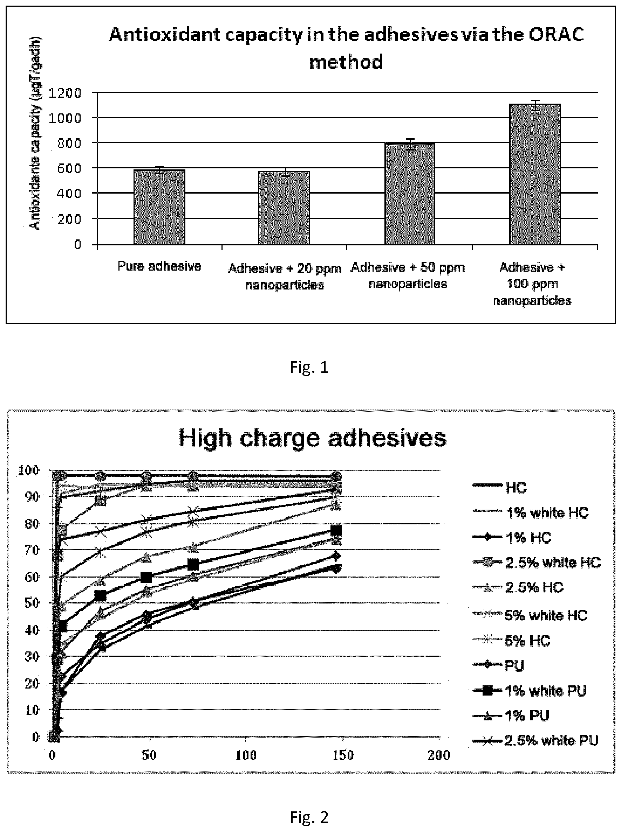

Figure 1.- Figure 1 shows an example of the results obtained with an antioxidant acrylic adhesive. As can be seen, what is measured is the percent inhibition of the free radical, which means the radical scavenging capacity of the sample studied. This ability to scavenge free radicals increases with the concentration of the nanoparticles, both if selenium nanoparticle suspension is added and if the adhesive containing said nanoparticles of Se is added. The results show great efficiency of free radical scavenging.
Figure 2.- Figure 2 measures the performance of the polyurethane and acrylic adhesives with different amounts of Se nanoparticles compared to time (min) measured by the DPPH test. This figure shows another example of the sequestering capacity using different concentrations of the selenium nanoparticles in a polyurethane adhesive. As observed, again the sequestration capacity of free radicals, and therefore the antioxidant capacity, increases with the concentration of the nanoparticles.

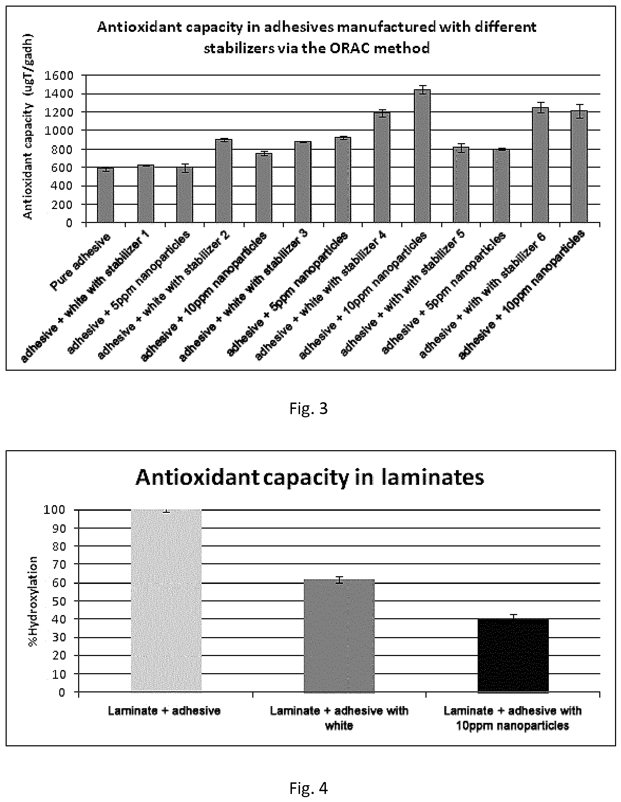

Figure 3.- Figure 3 shows the results obtained when various stabilizers were used. As seen, the adhesive shows increased capacity to sequester free radicals with the increased concentration of adhesive and a clear correlation between the concentration and antioxidant capacity (CAOX). This test demonstrates that the adhesive containing nanoparticles of Se significantly increases the antioxidant capacity of the adhesive.
Figure 4.- Figure 4 shows the free radical scavenging capacity of the multilayer system produced from the antioxidant adhesive containing the selenium (Se) nanoparticles, object of the present invention. Figure 4 shows the antioxidant scavenging capacity of several free radicals multilayer systems containing different concentrations of SENPs used in a plastic bag against a blank (without SENPs multilayer system). As seen in Figure 4, there is an absolute evidence that the multilayer system comprising the SeNPs is more effective as a free radical scavenger when compared to a multilayer system without adhesive or compared to a multilayer system with adhesive but without SeNPs.

### DETAILED DESCRIPTION OF THE INVENTION

It can be said that the traditional function of the package is changing from being simply the material that contains the food and protects it from the external environment to become a functional material, which allows both the producer and the consumer to verify the product they are selling/buying and with proper nutritional and microbial quality.

The trend is once again to imitate nature, protecting food with functional packaging such as, for example, packaging for fruit such as bananas or oranges, including others, which in addition to protecting the contents of the environment indicate how ripe they are.

One of the main purposes of packaging containing nanomaterials is to achieve a longer preservation time by improving the barrier functions of the material used for packaging food, in order to reduce the exchange of gases and moisture and exposure to ultraviolet rays.

The packaging materials that release chemical substances make it possible for food packaging to interact with its contents. The exchange can occur in both directions. The packaging can release antimicrobial agents, antioxidants, flavours, fragrances or nanoscopic nutraceuticals to the food and beverages they contain, in order to prolong their shelf life or improve their organoleptic properties. Nanomaterials for packaging are also being developed which can absorb unwanted tastes.

In many cases, the packaging materials release chemical substances that also incorporate control elements, namely, elements that determine that the nano chemicals should be released only in response to specific conditions that have been triggered.

There are other packaging materials and materials in contact with food that, unlike the packaging materials that release chemicals based on certain triggering circumstances (e.g. biocides that are released in response to the growth of the microbial population, moisture or other changing conditions) have antimicrobial nanomaterials incorporated such that the packaging itself acts as an antimicrobial agent as a result of being in direct contact with the packaged product. These products generally use silver nanoparticles, although some use zinc oxide nanoparticles or chlorine dioxide.

However, and as shown in the section of the state of the art, there is no publication which discloses the subject matter of the present invention that relates primarily to an adhesive composition for a multilayer system comprising a flexible packaging which includes selenium nanoparticles that confer antioxidant properties to the flexible packaging, allowing better preservation of the biological material.

Said adhesive composition, object of the invention herein, has the technical advantage that is highly effective, namely, has the dual capacity of being an adhesive and an antioxidant, meaning certain layers can be dispensed with in the final packaging (as additional layers of adhesive and/or antioxidant material are not required) and more importantly, that said composition does not cause migration of selenium particles from the packaging to the biological material contained in said packaging as said adhesive composition is located between layers of polymer that make up the packaging.

The need for prevention or elimination of migration of materials used in adhesives to packaged food products, was recently revealed in The First Industry Meeting of the Spanish Institute of Packaging, held on 29th May 2014 referred to the importance of migration of adhesives for packaging intended for food use. The importance of migration studies were explained in respect of the possible components of adhesives transferring into the food, including the possibilities and limitations thereof. After reviewing the legal framework currently in force, the EU Regulation 1934/2004 on materials and objects intended to come into contact with food and RD 847/2011, which establishes the positive list of permitted substances for the manufacture of polymeric materials intended for coming into contact with food.

Accordingly, the researchers of the present invention, painstakingly researched how to provide adhesive manufacturers of adhesives with the methods to ensure the safety thereof when in contact with food products taking into account that: there are a lot of toxic compounds; that there are no similar adhesives and that migration largely depends on substances and functional barriers (e.g. a large amount of substances can pass through polyethylene).

In addition, this is more relevant in the case of water-based adhesives as they are most commonly used in the flexible packaging industry, where it is necessary to obtain water-based adhesives that exhibit the advantages of being perfect for contact with foods, they can be cut immediately, they do not need to be left standing or cure time and costs are reduced.

Therefore, the researchers of the present invention have developed an adhesive composition that has all the aforementioned advantages thereby being extremely versatile for use in multilayer systems used for manufacturing flexible packaging for storage of biological material, in particular for food.

On the other hand, researchers of the present invention have been mainly focused on incorporating selenium nanoparticles (SeNPs) as a functional antioxidant component of the adhesive composition. The reason is because the SeNPs have high antioxidant capacity due to sequestration of free radicals that capture said nanoparticles in the environment.

Free radicals are atoms or groups of atoms having one unpaired or free electron, therefore, they are very reactive, as they tend to capture an electron from stable molecules in order to achieve electrochemical stability. Once the free radical has managed to extract the electron it needs, the stable molecule that releases it, in turn, becomes a free radical as it remains with an unpaired electron, starting a real chain reaction that destroys our cells. The average biological life of the free radical is microseconds, but has the capacity to react to everything around it causing great damage to molecules, cell membranes and tissues through oxidation reactions.

The processes of oxidation are free radical chemical reactions, namely, that they are initiated by free radicals and pass through radical transfer. They are chain reactions, such that once started they spontaneously spread and only end when the radicals disappear. The antioxidant performance of the new adhesive that has been developed, and object of the present invention is based on the ability to scavenge free radicals. This antioxidant concept is based on the principle of oxidation processes, where the organic substrate, oxygen and free radicals are the three main actors of the reaction and therefore play a very important role. The removal of one of these agents prevents the process of oxidation. In general, the oxygen is removed, but a more appealing option is to remove the free radicals. As the oxidation process is a reaction involving radicals, if free radicals are present in the oxidation reaction environment, the process is not carried out.

Accordingly, the new approach of the present invention is to use a scavenging agent of said free radicals which is selenium, in particular in the form of selenium nanoparticulates.

Selenium has been extensively studied for its antioxidant properties. Selenium in the form of selenocysteine is necessary for the antioxidant activity of enzymes such as peroxidases or reductases. It also coordinates with metal ions in active sites forming dehydrogenases and [NiFeSe] hydrogenases. In addition to the selenoproteins, small molecule selenium (Se) metabolites are essential for the antioxidant biological activity of this element.

The protective effects of selenium are due primarily to its presence as a cofactor, in the form of the 21st amino acid SeCyst, in enzymes such as glutathione peroxidase (GPx) and thioredoxin reductase (TRx), which act as protective agents for the cellular components against oxidative damage. Glutathione peroxidase detoxifies a wide variety of oxidizing substances such as H₂O₂, fatty acid hydroperoxides, phospholipid hydroperoxides and other reactive oxygen species (ROS).

Studies performed both in vitro and in vivo have demonstrated the protective effect of various forms of selenium against oxidative stress. The diet is the main source of supply of this trace element to organisms. The bioavailability of selenium in foods is highly variable and depends primarily on its chemical form. γ-Selenium in foods can be found in different chemical forms, Se (IV), Se (VI) and in the form of seleno-amino acids (selenomethionine, selenocysteine, seleno-methyl-selenocysteine, 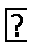 -glutamyl selenomethyl selenocysteine, seleno-methyl-methionine) incorporated or not to the proteins.

It also coordinates with metal ions in active sites forming dehydrogenases and [NiFeSe] hydrogenases. In addition to the selenoproteins, small molecule selenium metabolites are essential for the antioxidant biological activity of this element.

Furthermore, it has been shown that selenium nanoparticles have an antioxidant capacity by means of capturing free radicals and protect DNA from oxidation. The smaller the size of the nanoparticles, the greater the antioxidant capacity. Both their chemical and biological properties have not been studied in depth but some trials have shown that their antioxidant properties are much better than those that the aforementioned selenium compounds confer.

It has been proven in tests carried out in vitro that the toxicity of selenium nanoparticles appears at much higher concentrations than those of other species for this element. There is evidence to show that selenium nanoparticles have a double effect, which is essential for the purpose of this invention:
1.- Low impaired growth of healthy cells, and
2.- High inhibition of cell growth in cancer cells.

The present invention also relates to an antioxidant multilayer system for manufacturing flexible packaging comprising the adhesive composition according to the present invention, and the final packaging comprising the multilayer system with highly safe antioxidant capacity for material of biological origin which is packaged as there is no migration of selenium particles to the product.

With the exception of glass, most of the materials used in flexible packaging, in particular food packaging, are formed by more than one material. In fact, to improve the characteristics of the packaging, the latter is manufactured by combining several basic materials. The most common are:
- Metals: the most common is aluminum.
- Metallic films: usually PP-aluminum and PET-aluminum.
- Polymers: PE, PP, polystyrene, PVC, PET, polyamides.
- Paper or cardboard.

In addition, film-film multilayer materials consist of multiple layers, on occasion more than ten, depending on the application. The philosophy of a film-film multilayer material consists of using a layer of plastic to solve each of the problems that the packaging of a product exhibits. Therefore, different layers will be used depending on whether films with barrier properties to gases, aromas, resistance to high or low temperatures, anti-fog, anti-static, high chemical resistance, abrasion resistance, mechanical strength, biodegradable and recycled etc. are required

There are many applications for multilayer and multimaterial materials in the food industry, from dry packaged goods, frozen foods, meat, fish, prepared foods, sauces and cheeses, etc.

One or more adhesives can be used to bond these layers in order to firmly attach the layers without affecting the properties of the materials joined. This process is called lamination and allows a variety of multilayers to be created by combining different materials with complete freedom in respect of thickness. Furthermore, lamination means non-plastic materials such as aluminum and paper can be used in the multilayers.

As described herein, adhesives are required for the formation of multilayers. In view of the foregoing, creating an antioxidant container by adding nanoparticles in the adhesive involves the advantage of not having to add an additional layer to the multilayer, but rather that the layer of adhesive is used which must be present in the packaging anyway. Reduced financial and environmental costs is thereby achieved than is the case of adding an additional layer of another material. In this manner, the packaged product will be protected against oxidation without the need to use a high barrier material that prevents oxygen from entering, as the antioxidant effect is achieved by removing (sequestering) the free radicals, not the molecular oxygen.

For the purpose of the present invention the term "film-film multilayer system," "multilayer system", "multilayer material" or "film-film multilayer materials" are defined interchangeably as the material obtained by the affixed joint of a plurality of layers of different types (plastic, metal, polymer, cellulose, paper, cardboard, etc.) in the form of sheets, generally by means of a process known as lamination which is well known in the state of the art.

The present invention further relates to the method for obtaining the adhesive composition and the suspension of selenium nanoparticles (SeNPs), and the use of the adhesive composition according to the present invention for producing an antioxidant multilayer system suitable for making flexible packaging that protect and preserve the biological material of plant or animal origin, such as food, cell cultures, organs, sperm, etc.

The method for manufacturing the adhesive or adhesive composition is a mechanical mixture inside a batch reactor. The reactor is equipped with a stirrer and is loaded with commercial products following established methods, known in the state of the art and the mixture is stirred at a given speed in a range between 500 and 2000 rpm and a period ranging from 30 minutes and 3 hours (depending on the type of adhesive) at ambient temperature.

These new adhesives have the particular characteristic that a suspension of selenium nanoparticles are added thereto. Firstly, the plastic dispersion (that which confers adherence) is charged in the reactor and then, and during stirring, the nanoparticle suspension and the remaining components are added.

The adhesive composition comprises the following components in the following proportions by weight, such that the sum thereof does not exceed 100% of the composition:

| Component | % by weight |
|---|---|
| Aqueous plastic dispersion | 60-95% |
| Nanoparticle suspension 10-2500 ppm | 0,5-20% |
| Wetting agent | 0-5% |
| Water | 0-5% |
| Defoamer | 0-5% |

Wherein the aqueous plastic dispersion are commercial products comprising 35% -65% of active material content based on acrylic polymers (pure acrylic, acrylic-vinyl, acrylic-styrene, etc.), vinyl (for example, copolymers of ethylene vinyl acetate, vinyl acrylate acetate, for example, butyl acrylate, 2-ethyl-hexyl acrylate, etc.), polyurethanes. Some trade names are Acronal® and Epotal® by BASF, Mowilith® by Celanese, Carbobond® by Lubrizol. "

The suspension of nanoparticles 10-2500 mg/Kg (ppm) is prepared by adding a reducing agent to a solution of sodium selenite stabilised with a surfactant. The humectant is an anionic or non-ionic surfactant and the defoamer is oil-based (vegetable oils or mineral oils), silicone-based or EO/PO based (polyethylene glycol and polypropylene copolymers).

The plastic dispersion is the main raw material of an white glue type adhesive, is a whitish fluid having different levels of viscosity depending on the type. Various additives to modify the characteristics of the dispersion (viscosity, surface tension, adhesion, solids content, pH, etc.) is usually added to the plastic dispersion. Some of the most common additives are thickeners, surfactants, humectants, defoamers, plasticizers, antioxidants, fillers, pigments, preservatives or crosslinkers.

Industrially, the dispersion mixture with the different additives is carried out in closed reactors (with a volume of 1m³ to 10m³) equipped with a Cowles type toothed agitator rotating at a speed in a range between 500 and 2000 rpm (preferably 1,500 rpm). Raw materials are supplied in tanks, containers, drums or bottles, depending on the provider and the required volume. The raw materials are introduced into the reactor and agitated for a period of time ranging from 30 minutes to 3 hours (depending on the product type) at ambient temperature. Once the period of production has elapsed, the product is discharged through two filters (25 micron and 5 micron).

Selenium nanoparticles were prepared by adding an appropriate reducing agent to a solution of sodium selenite in the presence of a surfactant such as a stabilizer. Neither the reducing agent nor the stabilizing agents should have toxic effects and they should be compatible with the adhesive.

A method for measuring the quantitative efficiency of obtaining selenium nanoparticles (hereafter SeNPs) is ultrafiltration and dialysis. For the present invention, it was possible to demonstrate the absence of inorganic ionic selenium in the adhesive medium, thereby avoiding adhesive the undesirable effect of selenium ionic migration to the medium, and ensuring that the nanoparticles have a high degree of selenium encapsulation and security in adhesive samples, as they do not migrate towards the products of biological origin, such as foodstuffs might be.

To manufacture the SeNPs, a concentration of an amount between 0.01 and 0.1 moles of ascorbic acid was added to the medium which assures the correct reduction of selenite to elemental selenium in order to form selenium nanoparticles (SeNPs). These SeNPs are stable and spherical and have an average diameter between 30nm and 60nm without forming agglomerates and fully compatible with the adhesive.

The right morphology and growth of the SeNPs is obtained by using the stabilizing agent or surfactant, which is preferably a mixed type of ethoxylated sodium sulfosuccinate (the Surfynol® type) resulting in SeNPs with an average particle size diameter of 50 nm. The initial concentration of the selenite solution that has been tested in the present invention ranges between 10 to 2500 mg/kg (ppm) in selenium. The concentration of selenite is 10 to 2500 ppm, although increasing concentrations were tested up to 10,000 ppm, at which the precipitation and agglomeration of the nanoparticles occurs.

A water-based adhesive composition for bonding a plurality of layers in a film-film multilayer system which comprises elemental selenium nanoparticles in a range of 10 to 2500 ppm.

One aspect of the present invention is a film-film multilayer formed of a plurality of layers comprising the adhesive composition claimed between at least two of the layers of the system. Importantly, the layers are joined by means of a laminating process and has between 2 and 10 layers.

Another aspect of the present invention is a flexible container with antioxidant properties that is manufactured from the aforementioned multilayer system and because it comprises the adhesive composition according to the present invention. Another aspect of the present invention is the use of the adhesive composition according to the invention herein for the manufacture of a suitable antioxidant system for manufacturing flexible packaging that protects and preserves biological material of plant or animal origin.

Another aspect of the present invention is the use of the aforementioned flexible package to package and protect biological material environment of both plant and animal origin. The biological material is preferably a foodstuff or cellular.

Another important aspect of the present invention is a method for obtaining the adhesive composition according to the present invention, comprising the following steps:
a.-) taking a suspension of elemental selenium nanoparticles at a concentration between 10 and 2500 ppm and keep it stabilized at ambient temperature,
b.-) charging a reactor with plastic dispersion and beginning to agitate,
c.-) adding step b.-) to the reactor, mechanically mixing, by means of a continuous mixer, the suspension of nanoparticles from step a.-), a wetting agent, an antifoam agent and water at a constant speed between 500 and 2000 rpm in a period between 30 minutes and 3 hours at ambient temperature, obtaining an optimal mixture of the adhesive composition, and
d.-) discharging the mixture from step c.-) of the reactor by passing it through two consecutive filters; the first having a 25 micron pore size and the second a 5 micron pore size, obtaining the final adhesive composition.

Importantly, the selenium nanoparticle suspension in step a.-) of the process described above is obtained by adding an amount between 0.01 and 0.1 M of ascorbic acid as a reducing agent to a solution of sodium selenite stabilized with a mixture of ethoxylated sodium with sodium sulfosuccinate as the surfactant or stabilizer (for example, Surfynol®).

### EXAMPLES OF EMBODIMENTS

The following specific examples provided here illustrate the nature of the present invention. These examples are included for illustrative purposes only and are not to be construed as limitations to the invention claimed herein.

### Example 1. Preparation of selenium nanoparticles (SeNPs)

Selenium nanoparticles were prepared by adding an appropriate reducing agent, in this case ascorbic acid 0,054M to a solution of sodium selenite to an initial concentration in the range of 10 to 2500 ppm of selenium in the presence of a mixture of ethoxylated sodium with sodium sulfosuccinate as a stabilizing agent. Neither the reducing agent nor the stabilizing agents should have toxic effects and they should all be compatible with the adhesive.

Quantitative efficiency for obtaining selenium nanoparticles (SeNPs) was tested by means of ultrafiltration techniques, dialysis and ICP-MS (Inductively coupled plasma mass spectrometry) which is capable of identifying and quantifying the performance of encapsulation of the Se nanoparticles.

Migration studies were conducted to verify the absence of inorganic ionic selenium in the adhesive medium, avoiding the effect of selenium ionic migration and ensuring that the nanoparticles have a high degree of selenium encapsulation and security in the adhesive samples.

### Example 2: Production of antioxidant adhesive containing SeNPs

Two different adhesives were manufactured: An acrylic adhesive and a new formulation of advanced technology polyurethane adhesive.

The performance and compatibility with the nanoparticle solution, the stability based on time and the functionality of the adhesive was evaluated. Various parameters such as strength of adhesion, viscosity, stability and thermal behaviour in the presence and absence of Se nanoparticles were evaluated. Several developer trays (two sheets glued together) of multilayer material (with different types of plastic sheets) were prepared in order to carry out these tests using an application of adhesive between 1-5g/m² of dry adhesive applied. The adhesion strength is measured by means of a T-peel test in a vertical dynamometer at 100 mm/min feed rate and a resistance value expressed in N/15 mm. The same test is repeated after storage at temperatures of 50-100°C after a sterilization test lasting 45 mins. at 120 ° C, after immersion in edible liquids (ketchup, mayonnaise, soup, etc.) for 7 days at 50°C. The viscosity is typically measured in a No. 4 Ford Viscosity Cup at 23°C and stability is measured after subjecting the adhesive to accelerated aging of 7,15 and 30 days at 50°C, checking visually that there is no physical separation in the product (sedimentation or separation of phases) and their adhesive ability remains intact.

Once the adhesive properties were evaluated, the antioxidant capacity was measured. The antioxidant capacity of the adhesive and subsequently the multilayer material containing selenium nanoparticles was evaluated by three different procedures which are described below, and provided very good results. The three methods used to measure the antioxidant capacity (CaOx) has been extensively compared, scientifically recognised at international level and endorsed by numerous scientific publications.

The formulation in this example is as follows:

| Component | % by weight |
|---|---|
| Aqueous plastic dispersion | 60-95% |
| Nanoparticle suspension 10-2500 ppm | 0.5-20% |
| Wetting agent | 0-5% |
| Water | 0-5% |
| Defoamer | 0-5% |

it is formed by a series of components in the weight ratios as indicated, such that the sum thereof does not exceed 100% of the composition:
The plastic dispersion was prepared first as it is the main raw material of a white glue-type adhesive.

Various additives to modify the characteristics of the dispersion (viscosity, surface tension, adhesion, solids content, pH, etc.) is usually added to the plastic dispersion. Some of the most common additives are thickeners, surfactants, humectants, defoamers, plasticizers, antioxidants, fillers, pigments, preservatives or crosslinkers.

Industrially, the dispersion mixture with the different additives is carried out in closed reactors (with a volume of 1m³ to 10m³) equipped with a Cowles type toothed agitator rotating at a speed in a range between 500 and 2000 rpm (preferably 1,500 rpm). Raw materials are supplied in tanks, containers, drums or bottles, depending on the provider and the required volume. The raw materials are introduced into the reactor and agitated for a period of time ranging from 30 minutes to 2-3 hours (depending on the product type) at ambient temperature.

Once the period of production has elapsed, the product is discharged through two filters (25 micron and 5 micron).

Next, a suspension of nanoparticles was prepared in a range from 10 to 2500 ppm by adding ascorbic acid as a reducing agent to a solution of sodium selenite stabilized with a mixture of ethoxylated sodium + sodium sulfosuccinate as a surfactant.

The humectant is an anionic or non-ionic surfactant and the defoamer is oil-based (vegetable oils or mineral oils), silicone-based or EO/PO based (polyethylene glycol and polypropylene copolymers).

Then, the wetting agent and antifoaming agent is added to the plastic dispersion in the same reactor, and it is agitated at 500 - 2000 rpm for a period of time ranging from 30-180 minutes. Finally, the suspension of selenium nanoparticles is added and allowed to stabilize for 30 minutes/hour to obtain the final adhesive product.

### Example 3: Calculation of antioxidant properties of the adhesive and the SeNPs

In the following example, the antioxidant properties of both the selenium nanoparticles and the final adhesive containing the nanoparticles were studied by two different methods:
1-. ORAC (Oxygen Radical Absorbance Capacity Test)
2-. DPPH (measuring the capacity for the elimination of the 1.1-diphenyl-2-picrylhidrazyl radical).

Results are expressed as µgTrolox/g of nanoparticle solution or per gram of adhesive or in the ORAC method and as a percent inhibition of DPPH radicals by means of the DPPH method after different reaction times. Trolox is a well known antioxidant that is used as a reference standard in this method.

Two different adhesives, each intended to be used for different materials and purposes were tested. Both the compatibility of the nanoparticles and the adhesive formula were studied and tested.

Figure 1 shows an example of the results obtained with an antioxidant acrylic adhesive. As can be seen, what is measured is the percent inhibition of the radical, which means the radical scavenging capacity of the sample, which increases with the concentration of the nanoparticles. Said antioxidant capacity is observed whether the selenium nanoparticle solution is added or if the adhesive containing said Se nanoparticles is added. The results show great efficiency of free radical scavenging.

Figure 2 measures the performance of the polyurethane and acrylic adhesives with different amounts of Se nanoparticles compared to time (min) measured by the DPPH test. This figure shows another example of the sequestering capacity using different concentrations of the selenium nanoparticles in a polyurethane adhesive based on time. This effect, as seen, increases with the concentration of the nanoparticles and with time.

A major theme of the new active adhesive is stability over time. Various stabilizers were tested and optimized. Figure 3 shows the results obtained when various stabilizers were used. As seen, the adhesive shows increased capacity to sequester free radicals with the increased concentration of adhesive and a clear correlation between the concentration and antioxidant capacity (CAOX). This test demonstrates that the adhesive containing the Se nanoparticles has an much greater antioxidant capacity than the adhesive without nanoparticles.

The antioxidants adhesives according to the present invention were used to make several multilayer materials, by combining multiple layers of plastic, such as PET and PE, PP and paper and other materials. Each adhesive formula was optimized depending on the application it was intended for.

### Example 4: Calculation of antioxidant properties of packages comprising the adhesive with the SeNPs

Several bags made from plastic multilayers produced from antioxidants adhesives were evaluated following the Pezo et al method (2008) (Pezo, D; Salafranca, J; Nerín, C. Determination of the antioxidant capacity of active food packagings by in situ gas-phase hydroxyl radical generation and high performance liquid chromatography-fluorescence detection. J. of Chromatography A, 178, Issues 1-2, 18, 126-133, 2008).

This method involves exposing a sample to an atmosphere rich in free radicals and observing the effect of the antioxidant material trapping the free radicals. The method by Pezo et al., developed in 2008 is based on an experimental system at laboratory level to determine the antioxidant capacity directly in a layer of plastic used as a packaging material. The experimental device designed by Pezo et al. was used for all tests conducted in the present example. An atmosphere enriched in free radicals, generated by the irradiation of UV light in an aqueous solution of H₂O₂ (0.29 mol L⁻¹) is passed through the plastic bag that is the object of the invention. After reacting in situ with eight polymer samples in parallel (the eight parallel samples correspond to eight replicas of each polymer), the remaining free radicals (which were not trapped by the antioxidant polymer) is reacted with a solution of salicylic acid at a pH of 4.5, yielding 2.3 -DHB and 25-DHB. Antioxidant capacity was indirectly assessed by HPLC-fluorescence determination of the highly sensitive 2.5-dihydroxybenzoic (2.5-DHB) acid formed. Chromatographic analysis of the 2.5-dihydroxybenzoic acid and residual salicylic acid is performed in an Alliance 2695 Separations Module (Waters, Milford, MA, USA) coupled to a 474 Scanning Fluorescence Detector (Waters, Milford, MA, USA). The chromatographic separation was performed on a reversed phase water column (100 mm long, 4.6 mm i.d., 3 µm) Atlantis ® dC18. The isocratic mobile phase was an aqueous mixture of acetate buffer solution (35 mmol L-1, pH 5.8, 1.0 mL min-1) and methanol, 90:10 (v/v). The injection volume was 20µl. The wavelengths of excitation and emission were set at 324 and 448 nm, respectively.

The results obtained (see Fig. 4) confirmed the free radical scavenging capacity of the multilayer system produced from the antioxidant adhesive containing the selenium nanoparticles, object of the present invention. Figure 4 shows the antioxidant scavenging capacity of several free radicals multilayer systems used in a plastic bag that contains different concentrations of SeNPs. As shown in Figure 4 there is absolute evidence that the multilayer system comprising the SeNPs is absolutely more effective as free radical scavenger and, therefore, as an antioxidant.

## Claims

1. A water based adhesive composition for bonding a plurality of layers in a film-film multilayer system containing elemental selenium nanoparticles in suspension, **characterised in that** the concentration of selenium nanoparticles is comprised in a range of 10 to 2500 ppm and **in that** it comprises the following components in the following proportions by weight, such that the sum thereof does not exceed 100% of the composition:
| Component | % by weight |
|---|---|
| Aqueous plastic dispersion | 60 - 95 % |
| Nanoparticle suspension 10-2500 ppm | 0.5 - 20 % |
| Wetting agent | 0 - 5 % |
| Water | 0 - 5 % |
| Defoamer | 0 - 5 % |

2. A water base adhesive composition according to claim 1, wherein the aqueous plastic dispersion comprises active material content, based on, acrylic polymers, vinyl polymers and polyurethanes, and wherein the active material content is present in percentage from 35-65% by weight.

3. Film-film multilayer system formed of a plurality of layers comprising the adhesive composition of claims 1 and 2 between at least two of the layers of the multilayer system.

4. Film-film multilayer system according to claim 3 **characterised in that** the layers of the system are joined by a laminating process.

5. Film-film multilayer system according to any of the claims 3 or 4 **characterised in that** it has between 2 and 10 layers.

6. Flexible packaging with antioxidant properties **characterised by** being manufactured with the multilayer system of claims 3 to 5 and because it comprises the adhesive composition of claims 1 and 2.

7. Use of the adhesive composition according to claims 1 and 2 for the manufacture of a suitable antioxidant system for manufacturing flexible packaging that protects and preserves biological material of plant or animal origin.

8. Use of the flexible packaging according to claim 7 for packaging and protecting the biological material environment of both plant and animal origin.

9. Use according to claim 8 **characterised in that** the biological material is a food.

10. Use according to claim 8 **characterised in that** the biological material is cellular.

11. Method for obtaining the adhesive composition according to claims 1 to 2, **characterised in that** it comprises the following steps:
a.-) taking a suspension of elemental selenium nanoparticles at a concentration between 10 and 2500 ppm and keep it stabilized at ambient temperature,
b.-) charging a reactor with a plastic dispersion and beginning to agitate,
c.-) adding step b.-) to the reactor, mechanically mixing, by means of a continuous mixer, the suspension of nanoparticles from step a.-), a wetting agent, an antifoam agent and water at a constant speed between 500 and 2000 rpm in a period between 30 minutes and 3 hours at ambient temperature, obtaining an optimal mixture of the adhesive composition, and
d.-) discharging the mixture from step c.-) of the reactor by passing it through two consecutive filters; the first having a 25 micron pore size and the second a 5 micron pore size, obtaining the final adhesive composition.

12. Process for obtaining the adhesive composition according to claim 11 **characterised in that** the suspension of selenium nanoparticles of step a) is obtained by adding an amount between 0.01 and 0.1 M of ascorbic acid as reducing agent to a solution of sodium selenite stabilized with a mixture of sodium sulfosuccinate and ethoxylated sodium as a stabilizing agent.

## Patentansprüche

1. Klebstoffzusammensetzung auf Wasserbasis zum Verbinden einer Vielzahl von Schichten in einem Film-Film-Mehrschichtsystem, das elementare Selen-Nanoteilchen in Suspension enthält, **dadurch gekennzeichnet, dass** die Konzentration an Selen-Nanoteilchen in einem Bereich von 10 bis 2500 ppm liegt und dass sie die folgenden Bestandteile in den folgenden Gewichtsanteilen umfasst, so dass die Summe davon 100 % der Zusammensetzung nicht überschreitet:
| Bestandteil | Gew.-% |
|---|---|
| Wässrige plastische Dispersion | 60 - 95 % |
| Nanoteilchensuspension 10-2500 ppm | 0,5 - 20 % |
| Netzmittel | 0 - 5 % |
| Wasser | 0 - 5 % |
| Entschäumer | 0 - 5 % |

2. Klebstoffzusammensetzung auf Wasserbasis nach Anspruch 1, wobei die wässrige plastische Dispersion einen Gehalt an aktivem Material umfasst, basierend auf Acrylpolymeren, Vinylpolymeren und Polyurethanen, wobei der Gehalt an aktivem Material in einem Prozentanteil von 35 bis 65 Gew.-% vorliegt.

3. Film-Film-Mehrschichtsystem, das aus einer Vielzahl von Schichten gebildet ist, die die Klebstoffzusammensetzung nach Anspruch 1 und 2 zwischen mindestens zwei der Schichten des Mehrschichtsystems umfassen.

4. Film-Film-Mehrschichtsystem nach Anspruch 3, **dadurch gekennzeichnet, dass** die Schichten des Systems durch einen Laminierprozess verknüpft sind.

5. Film-Film-Mehrschichtsystem nach einem der Ansprüche 3 oder 4, **dadurch gekennzeichnet, dass** es zwischen 2 und 10 Schichten aufweist.

6. Flexible Verpackung mit Antioxidationseigenschaften, **gekennzeichnet durch** die Herstellung mit dem Mehrschichtsystem nach Anspruch 3 bis 5, und weil es die Klebstoffzusammensetzung nach Anspruch 1 und 2 umfasst.

7. Verwendung der Klebstoffzusammensetzung nach Anspruch 1 und 2 zur Herstellung eines geeigneten Antioxidationssystems zur Herstellung einer flexiblen Verpackung, die biologisches Material pflanzlichen oder tierischen Ursprungs schützt und konserviert.

8. Verwendung der flexiblen Verpackung nach Anspruch 7 zum Verpacken und Schützen der biologischen Materialumgebung sowohl pflanzlichen als auch tierischen Ursprungs.

9. Verwendung nach Anspruch 8, **dadurch gekennzeichnet, dass** das biologische Material ein Lebensmittel ist.

10. Verwendung nach Anspruch 8, **dadurch gekennzeichnet, dass** das biologische Material zellulär ist.

11. Verfahren zum Erhalten der Klebstoffzusammensetzung nach Anspruch 1 bis 2, **dadurch gekennzeichnet, dass** es die folgenden Schritte umfasst:
a.-) Nehmen einer Suspension von elementaren Selen-Nanoteilchen in einer Konzentration zwischen 10 und 2500 ppm und Stabilisieren dieser bei Umgebungstemperatur,
b.-) Laden eines Reaktors mit einer plastischen Dispersion und Beginnen mit dem Rühren,
c.-) Zugeben von Schritt b.-) zum Reaktor, mechanisches Mischen, mittels eines kontinuierlichen Mischers, der Suspension von Nanoteilchen aus Schritt a.-), einem Netzmittel, einem Antischaummittel und Wasser bei einer konstanten Drehzahl zwischen 500 und 2000 U/min in einem Zeitraum zwischen 30 Minuten und 3 Stunden bei Umgebungstemperatur, Erhalten einer optimalen Mischung der Klebstoffzusammensetzung und
d.-) Ausgeben der Mischung aus Schritt c.-) aus dem Reaktor durch Leiten davon durch zwei aufeinanderfolgende Filter; wobei der erste eine Porengröße von 25 Mikron aufweist und der zweite eine Porengröße von 5 Mikron aufweist, Erhalten der endgültigen Klebstoffzusammensetzung.

12. Verfahren zum Erhalten der Klebstoffzusammensetzung nach Anspruch 11, **dadurch gekennzeichnet, dass** die Suspension von Selen-Nanoteilchen von Schritt a) erhalten wird, indem eine Menge zwischen 0,01 und 0,1 M Ascorbinsäure als Reduktionsmittel zu einer Lösung von Natriumselenit gegeben wird, die mit einer Mischung von Natriumsulfosuccinat und ethoxyliertem Natrium als Stabilisierungsmittel stabilisiert ist.

## Revendications

1. Composition adhésive à base d'eau pour lier une pluralité de couches dans un système multicouche film-film contenant des nanoparticules de sélénium élémentaire en suspension, **caractérisée en ce que** la concentration en nanoparticules de sélénium est comprise dans une plage de 10 à 2500 ppm et **en ce qu'**elle comprend les composants suivants dans les proportions en poids suivantes, de telle sorte que leur somme n'excède pas 100 % de la composition :
| Composant | % en poids |
|---|---|
| Dispersion plastique aqueuse | 60 à 95 % |
| Suspension de nanoparticules 10-2 500 ppm | 0,5 à 20 % |
| Agent mouillant | 0 à 5 % |
| Eau | 0 à 5 % |
| Anti-mousse | 0 à 5 % |

2. Composition adhésive à base d'eau selon la revendication 1, dans laquelle la dispersion plastique aqueuse comprend une teneur en matière active, à base de, polymères acryliques, polymères vinyliques et polyuréthanes, et dans laquelle la teneur en matière active est présente en pourcentage de 35 à 65 % en poids.

3. Système multicouche film-film formé d'une pluralité de couches comprenant la composition adhésive des revendications 1 et 2 entre au moins deux des couches du système multicouche.

4. Système multicouche film-film selon la revendication 3 **caractérisé en ce que** les couches du système sont jointes par un procédé de stratification.

5. Système multicouche film-film selon l'une quelconque des revendications 3 ou 4 **caractérisé en ce qu'**il a entre 2 et 10 couches.

6. Conditionnement flexible avec des propriétés antioxydantes **caractérisé en ce qu'**il est fabriqué avec le système multicouche des revendications 3 à 5 et car il comprend la composition adhésive des revendications 1 et 2.

7. Utilisation de la composition adhésive selon les revendications 1 et 2 pour la fabrication d'un système antioxydant approprié pour la fabrication de conditionnements souples qui protègent et préservent la matière biologique d'origine végétale ou animale.

8. Utilisation du conditionnement souple selon la revendication 7 pour le conditionnement et la protection de l'environnement de la matière biologique d'origine à la fois végétale et animale.

9. Utilisation selon la revendication 8 **caractérisée en ce que** la matière biologique est un aliment.

10. Utilisation selon la revendication 8 **caractérisée en ce que** la matière biologique est cellulaire.

11. Procédé d'obtention de la composition adhésive selon les revendications 1 à 2, **caractérisé en ce qu'**il comprend les étapes suivantes :
a.-) prendre une suspension de nanoparticules de sélénium élémentaire à une concentration comprise entre 10 et 2500 ppm et la maintenir stabilisée à température ambiante,
b.-) charger un réacteur avec une dispersion plastique et commencer à agiter,
c.-) ajouter l'étape b.-) au réacteur, mélanger mécaniquement, au moyen d'un mélangeur continu, la suspension de nanoparticules de l'étape a.-), un agent de mouillage,
un agent anti-mousse et de l'eau à une vitesse constante comprise entre 500 et 2000 tr/min pendant une période comprise entre 30 minutes et 3 heures à température ambiante, obtenir un mélange optimal de la composition adhésive, et
d.-) évacuer le mélange de l'étape c.-) du réacteur en le faisant passer à travers deux filtres consécutifs ; le premier ayant une taille de pore de 25 microns et le second une taille de pore de 5 microns, obtenant la composition adhésive finale.

12. Procédé d'obtention de la composition adhésive selon la revendication 11 **caractérisé en ce que** la suspension de nanoparticules de sélénium de l'étape a) est obtenue en ajoutant une quantité comprise entre 0,01 et 0,1 M d'acide ascorbique comme agent réducteur à une solution de sélénite de sodium stabilisée avec un mélange de sulfosuccinate de sodium et de sodium éthoxylé comme agent stabilisant.
